# EUROPÄISCHE PATENTSCHRIFT

(11) **EP 1 789 291 B1**
(45) Veröffentlichungstag und Bekanntmachung des Hinweises auf die Patenterteilung: **11.11.2009**
(21) Anmeldenummer: 05775843.5
(22) Anmeldetag: 21.07.2005
(51) Int. Cl.: B60R 21/16

(54) **GASSACK UND VERFAHREN ZU SEINER HERSTELLUNG**
GAS BAG AND METHOD FOR THE PRODUCTION THEREOF
POCHE A GAZ ET SON PROCEDE DE PRODUCTION

(30) Priorität: 15.09.2004 DE 102004044525
(43) Veröffentlichungstag der Anmeldung: 30.05.2007
(73) Patentinhaber: AUTOLIV DEVELOPMENT AKTIEBOLAG, 447 83 Vargarda (SE)
(72) Erfinder: SCHANG, Benoit, Gournay-En-Bray (FR)
(74) Vertreter: Schön, Thilo
(86) Internationale Anmeldenummer: PCT/EP2005/007938
(87) Internationale Veröffentlichungsnummer: WO 2006/029669

(56) Entgegenhaltungen:
- WO-A-02/079008
- US-A1- 2002 105 173
- US-A1- 2003 160 434
- US-A1- 2004 104 561

## Beschreibung

### Beschreibung

### Technisches Gebiet der Erfindung

Die Erfindung betrifft einen Gassack nach dem Oberbegriff des Anspruchs 1, sowie ein Verfahren zu seiner Herstellung nach Anspruch 3.

### Stand der Technik

Zur Verbindung des Gassacks mit einem Gasgenerator ist es insbesondere bei sogenannten Vorhang-Gassäcken üblich, an der oberen Kante der Gassackhülle einen im wesentlichen L-förmigen Aufnahmeabschnitt für den Gasgenerator vorzusehen. Ein solcher Gassack ist beispielsweise aus der gattungsbildenden WO 02/079008 A1 bekannt.

Die Außenhülle des Gassacks ist hierbei aus zwei Zuschnitten mit einer umlaufenden Naht zusammengenäht. Die beiden Zuschnitte weisen jeweils an ihrer Oberkante eine Ausstülpung auf, die im vernähten Zustand den Aufnahmeabschnitt bilden. In diesem Bereich ist weiterhin ein Stoffelement in den Gassack eingenäht, das ein Leitelement für das einströmende Gas bildet. Die Längsachse des montierten Gasgenerators erstreckt sich parallel zur Oberfläche der Außenhülle.

Der in der WO 02/079008 A1 vorgeschlagene Gassack macht aufgrund seiner Geometrie einen relativ aufwendigen Nähvorgang notwendig. Insbesondere ist es notwendig, dass die obere Kante der Außenhülle eine Naht aufweist, so dass die Außenhülle des Gassacks in der Regel aus wenigstens zwei Zuschnitten gefertigt sein muss.

Aus der US 2002/0105173 A1 ist ein Vorhanggassack bekannt, bei dem ein Aufnahmeabschnitt für den Gasgenerator als separates, rohrförmiges Element aus Gewebe hergestellt ist, wobei das vom Gasgenerator kommende Gas durch eine offene Stirnseite des rohrförmigen Elementes in den Gassack gelangt. Das rohrförmige Element ist um die offene Stirnseite herum mit dem Gassack vernäht.

### Gegenstand der Erfindung

Hiervon ausgehend ist es Aufgabe der Erfindung, einen gattungsgemäßen Gassack dahingehend weiterzubilden, dass seine Produktion und insbesondere der Vorgang des Zusammennähens vereinfacht wird.

Diese Aufgabe wird durch einen Gassack mit den Merkmalen des Anspruchs 1 sowie durch ein Verfahren zu seiner Herstellung mit den Merkmalen des Anspruchs 3 gelöst.

Erfindungsgemäß ist der Aufnahmeabschnitt als separates Element ausgebildet, wodurch ein sehr rationelles Herstellungsverfahren ermöglicht wird. Die Außenhülle des Gassacks weist eine Einlassöffnung auf. Der Zuschnitt, aus dem der Aufnahmeabschnitt geformt wird, weist ebenfalls eine Öffnung, im folgenden als Durchtrittsöffnung bezeichnet, auf und der Gewebezuschnitt des Aufnahmeabschnitts wird derart auf die Außenhülle aufgenäht, dass diese beiden Öffnungen übereinander liegen. In diesem Zustand wird durch Anbringen einer Naht aus dem Gewebezuschnitt der Aufnahmeabschnitt geformt. Der Gassack weist weiterhin ein Leitelement auf. Dieses ist mit derselben Naht, mit der der Aufnahmeabschnitt an der Außenhülle vernäht ist, befestigt.

Die Erfindung wird nun mit Bezug auf die Figuren näher erläutert. Hierbei zeigen:

### Kurzbeschreibung der Zeichnungen

- Figur 1: Eine Gassack-Einheit in einem Längsschnitt,
- Figur 2: den Bereich B aus Figur 1 in einer vergrößerten Darstel- lung ohne Gasgenerator,
- Figuren 3a-c: Zuschnitte des Gassacks vor dem Zusammennähen und
- Figur 4: die Zuschnitte aus den Figuren 3a bis c. die miteinander vernäht sind,
- Figur 5: eine der Figur 2 entsprechende Darstellung, wobei der Aufnahmeabschnitt eine alternative Ausgestaltung auf- weist.

### Beschreibung bevorzugter Ausführungsformen

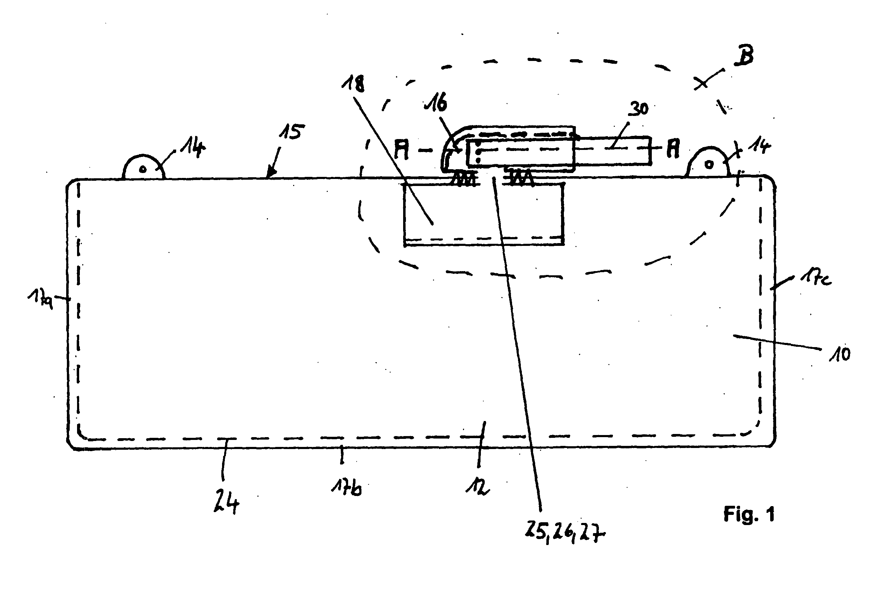

Figur 1 zeigt eine schematische Darstellung eines Vorhang-Gassacks mit montiertem Gasgenerator in einem Längsschnitt. Der Gassack weist eine aus zwei Seitenwandungen bestehende Außenhülle 10 auf. Aufgrund der Längsschnitt-Darstellung ist hier nur eine der beiden Seitenwandungen, nämlich die erste Seitenwandung 12 zu sehen. Die Außenhülle 10 besteht aus einem einstückigen Zuschnitt, der in vernähtern Zustand an der oberen Kante 15 umgeschlagen ist. An den drei übrigen Rändern 17a,b,c sind die beiden Seitenwandungen über die Umfangsnaht 24 miteinander vernäht. An der oberen Kante 15 sind weiterhin Befestigungslaschen 14 angeordnet.

Außerhalb der Außenhülle 10 befindet sich der rohrförmige Aufnahmeabschnitt 16, der zur Aufnahme des Gasgenerators 30 dient. Die Längsachse A-A des rohrförmigen Abschnitts erstreckt sich parallel zur Oberfläche der Außenhülle 10.

Bei Betätigung des Gasgenerators 30 strömt das Gas in den Aufnahmeabschnitt 16, verlässt diesen durch die Durchtrittsöffnung 26 und gelangt durch die Einlassöffnung 25 ins Innere des Gassacks. Im Bereich der Einlassöffnung 25 ist ein rohrförmiges Leitelement 18 angeordnet, das das Gas leitet. Hierfür weist das in seinen Stirnseiten offene Leitelement 18 eine Eintrittsöffnung 27 auf. Einlassöffnung 25, Durchtrittsöffnung 26 und Eintrittsöffnung 27 sind im wesentlichen deckungsgleich.

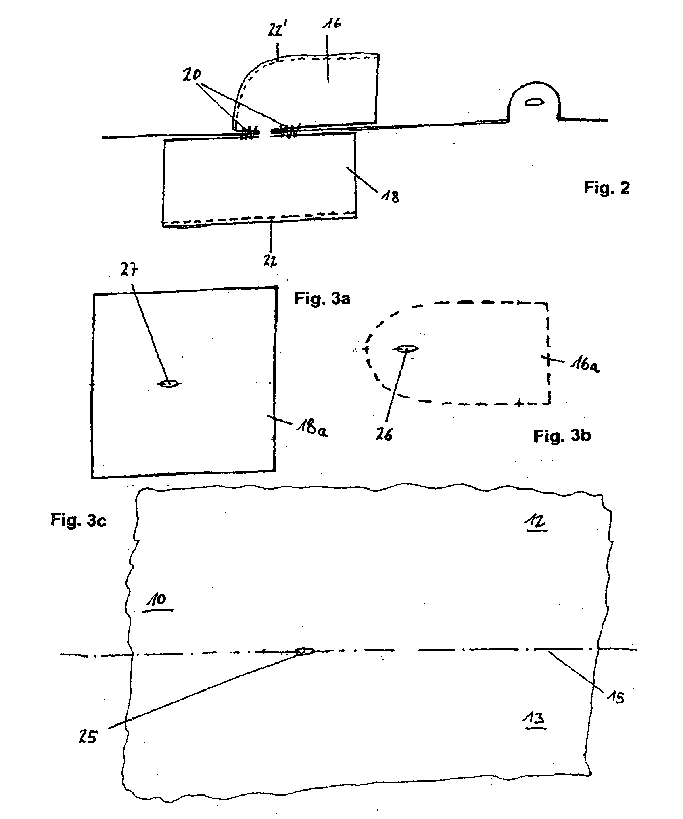

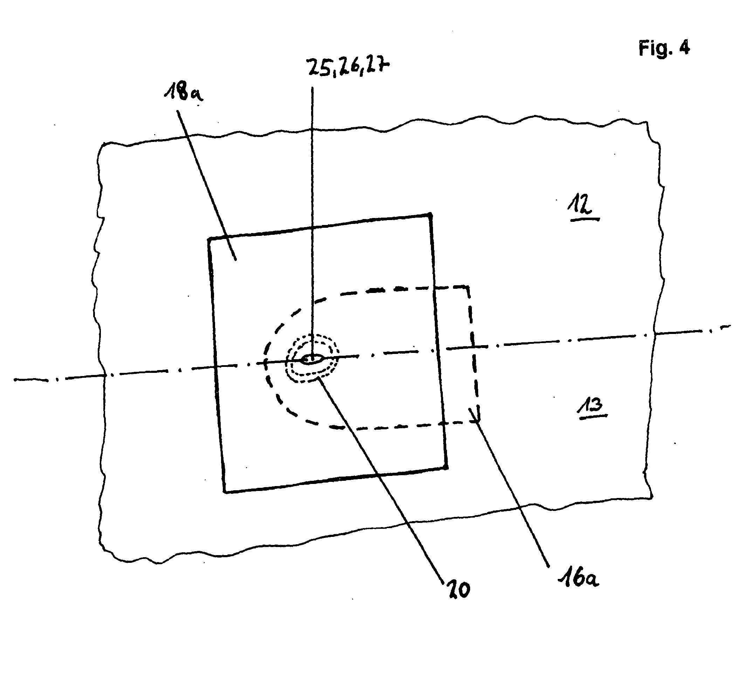

Leitelement 18 und Aufnahmeabschnitt 16 werden aus separaten Gewebezuschnitten 18a und 16a gefertigt, wie sie in den Figuren 3a und 3b dargestellt sind. Beim Herstellen des Gassacks werden diese auf unterschiedlichen Seiten der Außenhülle 10 derart angeordnet, dass Einlassöffnung 25, Durchtrittsöffnung 26 und Eintrittsöffnung 27 im wesentlichen deckungsgleich sind. Anschließend werden alle drei Elemente mit einer diese Öffnungen umschließenden Verbindungsnaht 20 vernäht. Dies ist in Figur 4 dargestellt. Als nächstes wird die Mantelfläche des Leitelements 18 mit der Naht 22 geschlossen. Hierauf wird die erste Seitenwandung 12 auf die zweite Seitenwandung 13 geschlagen, so dass sich nun das Leitelement 18 im Inneren des Gassacks befindet. Jetzt kann der Aufnahmeabschnitt 16 mit der weiteren Naht 22' und die Außenhülle 10 mit der Umfangsnaht 24 geschlossen werden (s. hierzu Figuren 1 und 2).

Wie man sieht, benötigt man zur Herstellung des erfindungsgemäßen Gassacks nur sehr wenige geometrisch einfache Zuschnitte, sowie lediglich eine geringe Anzahl von Nähten. Die hierdurch vereinfachte Herstellungsweise hat keine Nachteile bezüglich der Funktion des fertigen Gassacks.

Anstatt einer Einlassöffnung 25 können eine Mehrzahl von Einlassöffnungen vorgesehen sein, wobei die Verbindungsnaht 20 jeweils um die einzelnen Öffnungen herumgeführt sein oder um die Mehrzahl der Öffnungen umschließen kann.

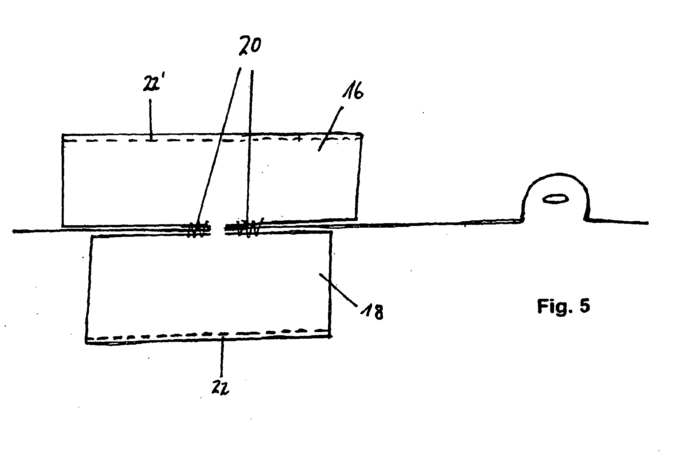

Der Aufnahmeabschnitt 16 kann - wie in den Figuren 1 und 2 dargestellt - eine Aufnahmeöffnung für einen Gasgenerator aufweisen, oder alternativ können zwei Aufnahmeöffnungen vorgesehen sein, siehe Figur 5. In diesem Fall strömt das Gas aus einem mittigen Bereich des Gasgenerators beziehungsweise eines diesen umgebenden Deflektors und gelangt in den Gassack.

### Bezugszeichenliste

- 10: Außenhülle
- 10a: Zuschnitt der Außenhülle
- 12: erste Seitenwandung
- 13: zweite Seitenwandung
- 14: Befestigungslasche
- 16: Aufnahmeabschnitt
- 16a: Zuschnitt des Aufnahmeabschnitts
- 18: Leitelement
- 18a: Zuschnitt des Leitelements
- 20: Verbindungsnaht
- 22,22': Naht
- 24: Umfangsnaht
- 25: Einlassöffnung
- 26: Durchtrittsöffnung
- 27: Eintrittsöffnung
- 30: Gasgenerator

## Patentansprüche

1. Gassack mit einer zumindest eine Einlassöffnung (25) aufweisenden Außenhülle (10), einem sich von der zumindest einen Einlassöffnung (25) nach außen erstreckenden, rohrförmigen, aus Gewebe bestehenden Aufnahmeabschnitt (16) für einen Gasgenerator (30), wobei die Längsachse (A-A) des Aufnahmeabschnitts (16) im wasentlichen parallel zur Oberfläche der Außenhülle ist, und einem innerhalb der Außenhülle im Bereich der Einlassöffnung angeordneten, aus Gewebe bestehenden, rohrförmigen Leitelement (18),
**dadurch gekennzeichnet, dass** der Aufnahmeabschnitt (16) ein separates Element ist, das mittels einer sich um die zumindest eine Einlassöffnung (25) erstreckenden Verbindungsnaht (20) mit der Außenhülle (10) vernäht ist und dass Aufnahmeabschnitt (16) und Leitelement (18) mittels der selben Naht (20) mit der Außenhülle vernäht sind.

2. Gassack nach Anspruch 1, **dadurch gekennzeichnet, dass** er ein Vorhang-Gassack ist.

3. Verfahren zum Herstellen eines Gassacks mit einer eine Einlassöffnung (25) ausweisenden Außenhülle (10), einem sich von der Einlassöffnung (25) nach außen erstreckenden, rohrförmigen, aus Gewebe bestehenden Aufnahmeabschnitt (16) für einen Gasgenerator, wobei die Längsachse des Aufnahmeabschnitts im wesentlichen parallel zur Oberfläche der Außenhülle ist, und einem Innerhalb der Außenhülle im Bereich der Einlassöffnung angeordneten, aus Gewebe bestehenden, rohrförmigen Leitelement (18), wobei Außenhülle, Aufnahmeabschnitt und Leitelement aus separaten Gewebezuschnitten bestehen mit folgenden Schritten;
- Positionieren der belden das Leitelement (18) und den Aufnahmeabschnitt (16) bildenden Gewebezuschnitte (18a, 16a) im Bereich der Einlassöffnung (25) auf unterschiedlichen Seiten der Außenhülle (10),
- Festnähen der beiden Gewebezuschnitte an der Außenhülle mit einer die Einlassöffnung umlaufenden Verbindungsnaht (20),
- Anbringen von Nähten (22,22') an den beiden Gewebezuschnitten (18,16),
- Schließen der Außenhülle mit einer Umfangsnaht (24).

## Claims

1. Gas bag with an outer skin (10) having at least one inlet opening (25), a receiving section (16) for a gas generator (30) extending from the at least one inlet opening (25) to the outside, said receiving section (16) being of tubular shape and consisting of fabric with the longitudinal axis (A-A) of the receiving section (16) being basically parallel to the surface of the outer skin, and a tubular guiding element (18) consisting of fabric being located inside the outer skin in the area of the inlet opening,
**characterised in that** the receiving section (16) is a separate element, that is sewn to the outer skin (10) by means of a connecting seam (20) surrounding the at least one inlet opening (25), and **in that** the receiving section (16) and the guiding element (18) are sewn to the outer skin by means of the same seam (20).

2. Gas bag according to claim 1, **characterised in that** the gas bag is a curtain gas bag.

3. Process for the manufacturing of a gas bag which comprises an outer skin (10) having at least one inlet opening (25), a receiving section for a gas generator (30) extending from the inlet (25) to the outside, said receiving section (16) being of tubular shape and consisting of fabric (16) with the longitudinal axis (A-A) of the receiving section (16) being basically parallel to the surface of the outer skin, and a tubular guiding element (18) made of fabric and being located inside the outer skin, said outer skin, said receiving element and said guiding element consisting of separate fabric cuttings, with following steps:
- positioning of the two fabric cuttings (18a,16a) forming the guiding element (18) and the receiving element (18) in the area of the inlet opening (25) on different sides of the outer skin (10).
- sewing the two fabric cuttings to the outer skin with one connecting seam (20) surrounding the inlet opening,
- putting on seams (22,22') at the two fabric cuttings (18,16),
- closing the outer skin with a circumferential seam (24).

## Revendications

1. Poche a gaz avec une enveloppe extérieure (10) présentant au moins une ouverture d'entrée (25), avec une section de logement (16) pour un générateur de gaz (30), en tissu, tubulaire, s'étendant de l'au moins une ouverture d'entrée (25) vers l'extérieur l'axe longitudinal (A-A) de la section de logement (16) étant essentiellement parallèle à la surface de l'enveloppe extérieure et avec un élément de conduite (18) tubulaire, en tissu, disposé à l'intérieur de l'enveloppe extérieure au niveau de l'ouverture d'entrée,
**caractérisée en ce que** la section de logement (16) est un élément séparé, qui est cousu à l'enveloppe extérieure (10) au moyen d'une couture d'assemblage (20) s'étendant autour de l'au moins une ouverture d'entrée (25) et **en ce que** la section de logement (16) et l'élément de conduite (18) sont cousus à l'enveloppe extérieure à l'aide de la même couture (20).

2. Poche à gaz selon la revendication 1, **caractérisée en ce qu'**il s'agit d'une poche à gaz formant rideau.

3. Procédé de production d'une poche à gaz avec une enveloppe extérieure (10) présentant une ouverture d'entrée (25), avec une section de logement (16) pour un générateur de gaz, en tissu, tubulaire, s'étendant de l'ouverture d'entrée (25) vers l'extérieur, l'axe longitudinal de la section de logement étant essentiellement parallèle à la surface de l'enveloppe extérieure et avec un élément de conduite (18) tubulaire, en tissu, disposé à l'intérieur de l'enveloppe extérieure au niveau de l'ouverture d'entrée, l'enveloppe extérieure, la section de logement et l'élément de conduite étant formés de morceaux de tissu séparés,
comprenant les étapes suivantes consistant à :
- positionner les deux morceaux de tissu (18a, 16a) formant l'élément de conduite (18) et la section de logement (16) au niveau de l'ouverture d'entrée (25) sur différents côtés de l'enveloppe extérieure (10),
- coudre ensemble les deux morceaux de tissu sur l'enveloppe extérieure avec une couture d'assemblage (20) entourant l'ouverture d'entrée
- réaliser des coutures (22, 22') sur les deux morceaux de tissu (18, 16),
- fermer l'enveloppe extérieure avec une couture périphérique (24).
